# EUROPÄISCHE PATENTSCHRIFT

(11) **EP 1 291 347 B1**
(45) Veröffentlichungstag und Bekanntmachung des Hinweises auf die Patenterteilung: **23.08.2006**
(21) Anmeldenummer: 02018873.6
(22) Anmeldetag: 24.08.2002
(51) Int. Cl.: C07F 5/02

(54) **Verfahren zur Herstellung von Bisallylboranen und nicht-aromatischen Boronsäuren**
Process for preparing bisallylboranes and non-aromatic boronic acids
Procédé de préparation de bisallylboranes et acides boroniques non-aromatiques

(30) Priorität: 07.09.2001 DE 10143979
(43) Veröffentlichungstag der Anmeldung: 12.03.2003
(73) Patentinhaber: Clariant Produkte (Deutschland) GmbH, 65929 Frankfurt am Main (DE)
(72) Erfinder: Scherer, Stefan, Dr., 64572 Büttelborn (DE); Kalinin, Alexei, Dr., Kingston ON, 7 KM 8Y5 (CA); Snieckus, Victor, Dr., Kingston ON, K7L 2G4 (CA)

(56) Entgegenhaltungen:
- MIKHAILOV, B. M. ET AL: "Organoboron compounds. CCXCV. Permanent allyl rearrangement in tris(3-methyl-2-buten-1-yl)borane and 1-allyl-2-(3-buten-1-yl)-4,4- dimethyl-5-chloromethyleneboracyclopentane " ZHURNAL OBSHCHEI KHIMII (1975), 45(1), 51-6 , 1975, XP002249210

## Beschreibung

Aromatische Boronsäuren sind in der Synthese komplexer organischer Moleküle nicht mehr wegzudenken. Sie erlauben es, eine Vielzahl sonst nur schwer zugänglicher Strukturen herzustellen.
In der chemischen Literatur gibt es eine Vielzahl von Beispielen für solche SuzukiReaktionen.
C-C-Verknüpfungsreaktionen, in denen aliphatische oder olefinische Boronsäuren zum Einsatz kommen, sind unterdessen eher selten.

Ein Grund hierfür ist die meist herausfordernde Synthese neuer, für die Forschung interessanter nicht-aromatischen Boronsäuren. Solche Boronsäuren würden die Einführung interessanter Substrukturen erlauben, die mittels klassischer Synthese nicht oder nur schwer zu realisieren sind.

So beschreibt Mikhailov, B.M. et al (Zhurnal Obshchei Khimii (1975), 45(1), 51-6) z.B. permanente Allylumlagerungen von Organoborverbindungen, insbesondere an Tris(3-methyl-2-butenyl)boran bei Temperaturen oberhalb von 40°C.

Aliphatische und olefinische Boronsäuren werden meist über die Hydroborierung von Alkenen und Alkinen oder aber über Grignardisierung von Halogenolefinen und Addition der so erhaltenen Magnesiumorganyle an Borsäureester hergestellt. Diese Reaktionen zeichnen sich jedoch in vielen Fällen durch nur geringe Chemo- und Regioselektivitäten aus. Beispiele hierfür sind die Reaktion von Catecholboran mit Styrenen oder die Reaktion von Alkylmagnesiumhalogeniden mit Borsäureestern. Insbesondere die Handhabung von Boranen im technischen Maßstab stellt aufgrund deren gefährlichen Eigenschaften oftmals ein Hindernis dar.

Die vorliegende Erfindung beschreibt einen einfachen, direkten und guten Ausbeuten liefernden Zugang zu Alkyl- und Alkenylboronsäuren über die entsprechenden Bis(allyl)borane in einem Topf.

Die vorliegende Erfindung betrifft somit ein Verfahren zur Herstellung von Bis(allyl)boranen der Formel (I) durch Umsetzung eines Dienes mit Natriumborhydrid in Gegenwart eines Oxidationsmittels in einem inerten Lösungsmittel, wobei das in situ erzeugte Boran mit dem Dien selektiv zum Bis(allyl)boran der Formel (I) reagiert. Bei der Reaktion wird im ersten Schritt Boran erzeugt, welches bei Abwesenheit des Diens zum Diboran dimerisiert, mit dem Dien jedoch hochselektiv das entsprechende Bis(allyl)boran bildet.

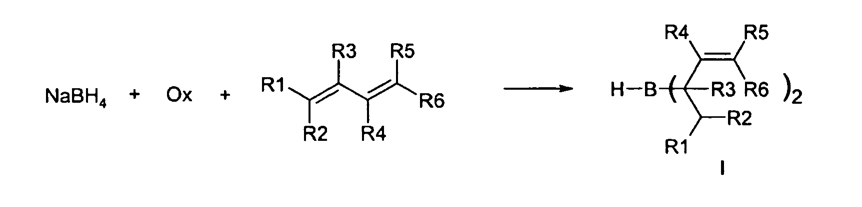

Dieser Zugang zu Bis(allyl)boranen ist neu und war so nicht zu erwarten, da in der Literatur die Reaktion von Boran mit Dienen als weitgehend unselektiv beschrieben ist und vornehmlich Borolane als Hauptprodukte liefert (Dokl. Akad. Nauk. SSSR, Ser. Khim. 1964, 155, 141; Izv. Akad. Nauk. SSSR, Ser. Khim. 1965, 2111). Bis(allyl)borane werden in der Literatur bislang über thermische Disproportionierungsreaktionen hergestellt.
In einer bevorzugten Ausführungsform wird als Dien 2,5-Dimethylhexa-2,4-dien (R¹, R², R⁵, R⁶ = Methyl, R³, R⁴ = H) eingesetzt.

Zum so generierten Bis(allyl)boran wird das Alken oder Alkin zugegeben und zur Reaktion gebracht. Diese Reaktion verläuft hoch regio- und chemoselektiv. Das so gebildete Alkyl- (V) bzw. Alkenyl-bis(allyl)boran (III) wird im selben Topf selektiv zum entsprechenden Boronsäurebisallylester oxidiert. Der Bis(allyl)ester kann als solcher isoliert oder derivatisiert werden.

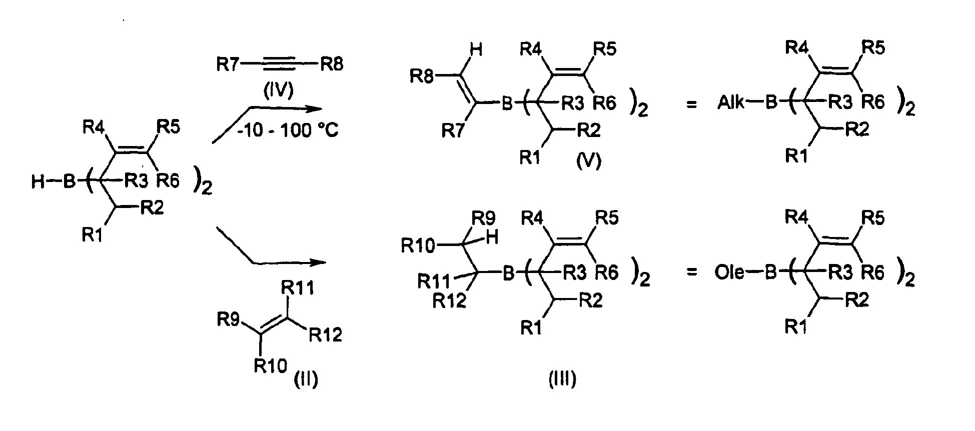

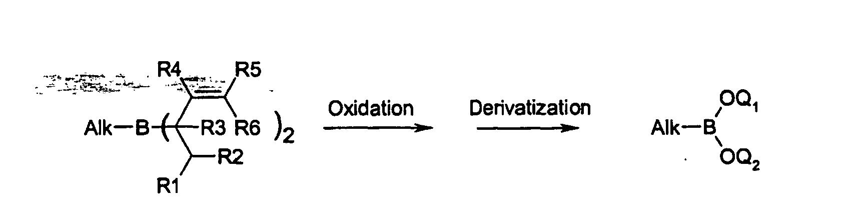

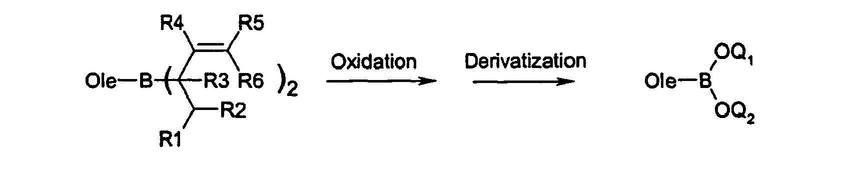

Weiterhin können die erzeugten Bis(allyl)borane und Bis(allyl)ester im selben Topf in C-C-Verknüpfungsreaktionen, beispielsweise Suzukireaktionen, verwendet werden. Eine Isolierung der Boronsäure kann dann umgangen werden. Dies ist besonders dann sinnvoll, wenn die Boronsäure sehr oxidations-, hitze- oder hydrolyseempfindlich ist.

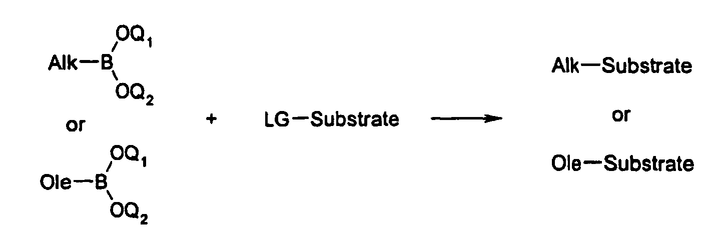

Im ersten Reaktionsschritt wird aus Natriumborhydrid mit Hilfe eines Oxidationsmittels (Ox), z.B. mit, gegebenenfalls substituierten, C₁-C₈-, insbesondere C₁-C₄-Alkylhalogeniden oder Dialkylsulfaten, bevorzugt mit Alkyliodiden oder -bromiden oder Dialkylsulfaten, besonders bevorzugt mit Dimethylsulfat, Diethylsulfat, Benzylbromid oder lodethan, in einem inerten Lösemittel, bei Temperaturen von -20 bis +30°C, bevorzugt bei -5 bis +10°C, in situ Diboran erzeugt, welches mit dem in der Reaktionsmischung vorhandenen Dien selektiv zum entsprechenden Bis(allyl)boran I reagiert.

Als Lösungsmittel eignen sich beispielsweise verschiedene Ether oder Kohlenwasserstoffe, insbesondere C₁-C₁₀ Kohlenwasserstoffe oder deren Gemische, bevorzugt Ether wie endgeschützte Oligo- oder Polyglykolether oder THF, besonders bevorzugt Diglyme, die gegenüber den Reaktanden inert sind.

Die Reste R¹-R⁶ bedeuten H, Aryl oder C₁-C₄-Alkyl, substituiert oder unsubstituiert, und können zu einem cyclischen System geschlossen sein, z.B. über die Reste R¹ und R⁵ zu einem sechsgliedrigen Ring, bevorzugt H und Methyl. In einer besonders bevorzugten Ausführungsform kommt 2,5-Dimethyl-hexa-2,4-dien (R¹, R², R⁵, R⁶ = Methyl, R³, R⁴ = H) zur Anwendung.
Das Dien wird in 1 bis 10 Moläquivalenten bezogen auf Natriumborhydrid eingesetzt, bevorzugt in 2-3 Moläquivalenten. Die Konzentration des gebildeten Bis(allyl)borans liegt zwischen 0.1 und 5 Mol/I, bevorzugt zwischen 0.5 und 2 Mol/l.

Die vorliegende Erfindung betrifft weiterhin ein Verfahren zur Herstellung von Boronsäuren, durch Umsetzung eines Dienes mit Natriumborhydrid in Gegenwart eines Oxidationsmittels zu dem entsprechenden Bis(allyl)boran der Formel (I) und weiterer Reaktion des Borans (I) mit einem entsprechenden Alken (II) oder Alkin (IV) zu den Alkyl- (III) und Alkenylbis(ally)boranen (V), welche in Gegenwart eines Oxidationsmittels direkt zu den entsprechenden Alkyl- bzw. Alkenyl-boronsäurebisallyestern oxidiert werden und gegebenenfalls anschließend derivatisiert werden.

Das so erzeugte Bis(allyl)boran (I) wird im selben Topf mit einem substituierten Alken (II) oder Alkin (IV) bei Temperaturen im Bereich von -10 bis 100°C, bevorzugt von 0 bis 50°C, besonders bevorzugt von 0 bis 25 °C zu den Alkylbis(allyl)boranen (III) beziehungsweise Alkenylbis(allyl)boranen (V) umgesetzt, die in vorteilhafter Weise in C-C-Knüpfungsreaktionen, insbesondere in Suzuki-Kupplungsreaktionen, Anwendung finden.

Die Reste R⁷ bis R¹² stehen dabei besonders für Aryl, gegebenenfalls substituiert, Alkyl-(C₁-C₈), gegebenenfalls verzweigt und oder substituiert, Alkoxy-(C₁-C₈), Acyloxy-(C₁-C₈), OPhenyl, Fluor, Chlor, NO₂, NH₂, NHAlkyl-(C₁-C₈), NAlkyl₂-(C₁-C₈), CN, CHO, SO₃H, SO₃R, SO₂NH₂, SO₂N(Alkyl-(C₁-C₈))₂, SO₂-Alkyl-(C₁-C₈), COO-Alkyl-(C₁-C₈), CONH₂, CO-Alkyl-(C₁-C₈), NHCHO, CF₃, 5-Ring-heteroaryl und 6-Ring-heteroaryl. Zwei Reste können auch ein cyclisches System bilden, das Heteroatome enthalten kann.
Die Breite der einsetzbaren Alkene und Alkine ist sehr groß. Die gegebenen Beispiele für Substituenten stellen lediglich einen Ausschnitt aus dem Spektrum dar, beschränken das erfindungsgemäße Verfahren jedoch keinesfalls darauf.

Um Selektivitätsprobleme bei der Oxidation zu vermeiden, beispielsweise bei der in der Literatur beschriebenen Oxidation von Bis(cyclohexyl)boranen zu Bis(cyclohexyloxy)boronsäuren (Synthesis, 1988, 103) mittels N-Oxiden, werden erfindungsgemäß im dritten Reaktionsschritt nach der Hydrolyse Ketoverbindungen für die Oxidation verwendet. Einsetzbar sind beispielsweise Formaldehyd, Aceton, Glyoxal, Diacetyl, bevorzugt Formaldehyd und Diacetyl.

Die Oxidation findet bei Temperaturen von 0 bis 100°C, bevorzugt bei 10 bis 40°C statt. Die Ketoverbindungen werden im Molverhältnis 1-2 bezogen auf eingesetztes Natriumborhydrid zugegeben.

Die Oxidation der Alkenylbis(allyl)borane (V) mittels Formaldehyd liefert Boronsäureester der allgemeinen Formel (VI), mittels Diacetyl solche der allgemeinen Formel (VII).

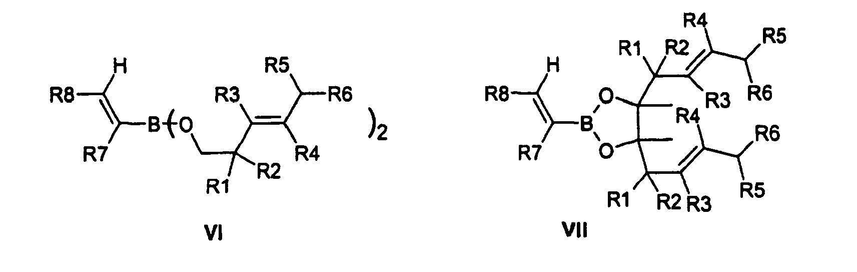

Die Boronsäureester, die aus der Oxidation der Alkylbis(allyl)borane (III) resultieren, besitzen die analoge Struktur, lediglich der Alkylsubstituent am Bor ist unterschiedlich.

Die so erzeugten Boronsäureester können nun nach bekannten Methoden in die entsprechenden Derivate umgewandelt werden. Hydrolyse beispielsweise liefert die freien Boronsäuren (Q1, Q2 = OH), Reaktion mit Pinakol die entsprechenden Pinakolester (Q1, Q2 = -OC(CH₃)₂-C(CH₃)₂O-) und Reaktion mit Diethanolamin die entsprechenden Diethanolaminester (Q1, Q2 = -OCH₂CH₂NHCH₂CH₂O-).

Prinzipiell lassen sich alle beliebigen Derivate problemlos herstellen, beispielsweise einfache Alkylester (Q1, Q2 = Oalkyl) oder cyclische Ester abgeleitet von Ethylenglykol oder Catecholboran.

Das beschrieben Verfahren bietet insbesondere die Möglichkeit, die in situ erzeugten Bis(allyl)borane (III) und (V) oder die Esterderivate (VI) und (VII) (auch die entsprechenden Alkylboronsäureester aus den Bis(allyl)boranen (III)) mit beliebigen geeigneten Substraten im Sinne einer Suzukikupplung zur Reaktion zu bringen. Die Substrate müssen ein Abgangsgruppe LG tragen, wobei LG insbesondere I, Br, Cl oder OSO₂CF₃ ist. Beispiel für Substrate sind beispielweise Brom- oder lodaromaten sowie Brom- oder lodolefine.

### Beispiel 1

Herstellung von Di-(1-isopropyl-3-methylbut-2-enyl)boran In einem ausgeheizten 100-mL-Kolben wurden unter Ar-Atmosphäre NaBH₄ (0,757 g, 20 mmol), 2,5-Dimethylhexa-2,4-dien (7,10 mL, 50 mmol) und wasserfreies Diglyme (20 mL) vorgelegt und in einem Eisbad gekühlt. Die nach dem Abkühlen erhaltene Reagenzienaufschlämmung wurde unter kräftigem Rühren langsam mit (MeO)₂SO₂ (1,90 ml, 20 mmol) versetzt, wobei die Reaktionstemperatur unter 5°C gehalten wurde. Die Zugabe war von intensiver Gasentwicklung und Aufklaren der Reaktionsmischung begleitet. Die gebildete Lösung wurde 3 h bei 0°C gerührt, was eine dicke Suspension von Di-(1-isopropyl-3-methylbut-2-enyl)boran ergab, die direkt im Hydroborierungsschritt verwendet wurde.

### Beispiel 2

### Allgemeine Vorschrift A

### 2-[(E)-2-Phenyl-1-ethenyl]-1,3,6,2-dioxazaborocan

Eine Suspension von frisch hergestelltem Di-(1-isopropyl-3-methylbut-2-enyl)boran wurde langsam (~20 min) mit Phenylacetylen (2,20 ml, 20 mmol) versetzt, wobei die Reaktionstemperatur unter 5°C gehalten wurde. Die gebildete Mischung wurde 1 h bei 0°C gerührt, langsam mit H₂O (3 mL) gequencht (wobei etwas Gasentwicklung auftrat), 0,5 h bei RT gerührt und dann in einem Guss mit einer Lösung von Formaldehyd (1,50 ml, 20 mmol, 37 gew.-%ige Lösung in Wasser) versetzt (exotherme Reaktion, Kühlbad erforderlich). Die Reaktionsmischung wurde 24 h bei RT gerührt und dann mit EtOAc (40 mL) verdünnt. Nach Trennung der Schichten wurde die organische Phase kurz getrocknet (Na₂SO₄), in einen Kolben mit Diethanolamin (2,31 g, 22 mmol) überführt und im Vakuum eingedampft (25 mmHg, dann 0,5 mmHg, Heizbad 50°C, dann 80°C). Der nach dem Eindampfen anfallende feste Rückstand wurde aus MeCN umkristallisiert, was das Produkt (3,34g, 15,38 mmol, 77 % Ausbeute) in Form von farblosen Nadeln ergab, Fp. 194-195°C; IR (KBr) 3000 br, 1622, 1598, 1573, 1494, 1469, 1454, 1277, 1242, 1206 cm⁻¹; ¹H-NMR (200 MHz, DMSO-d₆) 7.38-7.23 (komplex, 4H), 7.17-7.14 (m, 1H), 6.84 (br. s, 1H), 6.65 (d, 1H, *J* = 18.1 Hz), 6.23 (d, 1H, *J* = 18.1 Hz), 3.80-3.61 (komplex, 4H), 3.08-2.90 (m, 2H), 2.81-2.71 (m, 2H); ¹³C-NMR (75.4 MHz, Methanol-d₄) 140.9, 139.7, 129.6, 129.5, 128.0, 127.3, 64.1, 51.7;

MS El (*m*/*z*, relative Intensität) (M+ 217).

### Beispiel 3

### 2-[(Z)-1,2-Diphenyl-1-ethenyl]-1,3,6,2-dioxazaborocan

Diese Verbindung wurde nach der allgemeinen Vorschrift A aus Diphenylacetylen (3,56 g, 20 mmol), das der Reaktion als Feststoff zugesetzt wurde, hergestellt und in 66 % Ausbeute (3,89 g, 13,27 mmol) in Form von farblosen Kristallen isoliert, Fp. 227-228,5 °C; IR (KBr) 3222, 3076, 2859, 1595, 1493, 1270, 1198, 1132, 1102, 1070, 1050 cm⁻¹; ¹H-NMR (200 MHz, DMSO-d₆) 7.30-6.90 (m, 8H), 6.90-6.80 (m, 2H), 6.71 (s, 1H), 6.58 (br. s, 1H), 3.79-3.65 (m, 2H), 3.65-3.45 (m, 2H), 3.00-2.65 (m, 4H); ¹³C-NMR (75.4 MHz, Methanol-d₄) 146.3, 140.2, 133.9, 130.6, 129.5, 129.4, 128.7, 127.1, 126.3, 63.9, 52.0;

MS El (*m*/*z*, relative Intensität) (M+ 293)

### Beispiel 4

### 2-[2-(1,1,1-Trimethylsilyl)ethyl]-1,3,6,2-dioxazaborocan

Diese Verbindung wurde nach der allgemeinen Vorschrift A aus Vinyltrimethylsilan (2,93 mL, 20 mmol) unter weiteren 2 h Rühren der Reaktionsmischung bei RT vor dem Quenchen mit Wasser hergestellt und in 55% Ausbeute (2,35 g, 10,92 mmol) in Form von farblosen Nadeln isoliert; Fp. 185-186 °C; IR (KBr) 3090, 2955, 2897, 1461, 1421, 1353, 1296, 1244, 1216, 1159, 1111, 1065, 963 cm⁻¹; ¹H-NMR (200 MHz, DMSO-d₆) 6.52 (br. s, 1H), 3.73-3.60 (m, 2H), 3.60-3.50 (m, 2H), 3.05-2.88 (m, 2H), 2.69-2.62 (m, 2H), 0.34-0.20 (m, 2H), 0.20-0.04 (m, 2H), -0.09 (s, 9H); ¹³C-NMR (75.4 MHz, Methanol-d₄) 63.8, 52.2, 11.4, -1.64;

MS El (*m*/*z*, relative Intensität) (M+ 215)

### Beispiel 5

### 2-(2,3-Dihydro-1H-2-indenyl)-1,3,6,2-dioxazaborocan

Diese Verbindung wurde nach der allgemeinen Vorschrift A aus Inden (2,33 ml, 20 mmol) unter weiteren 2 h Rühren der Reaktionsmischung bei RT vor dem Quenchen mit Wasser hergestellt und in 48% Ausbeute (2,24 g, 9,69 mmol) in Form von farblosen Nadeln isoliert; Fp. 216-219°C (Zers.); IR (KBr) 3091 br, 2931, 2887, 1482, 1456, 1274, 1244, 1216, 1112, 1067 cm⁻¹; ¹H-NMR (300 MHz, DMSO-d₆) 8.28-8.17 (m, 2H), 8.17-8.06 (m, 2H), 7.93 (br. s, 1H), 4.91-4.80 (m, 2H), 4.80-4.70 (m, 2H), 4.45 (d, 1H, *J* = 6.9 Hz), 4.21-4.05 (m, 2H), 3.98-3.82 (m, 4H), 3.76-3.67 (m, 2H); ¹³C-NMR (75.4 MHz, Methanol-d₄) 147.2, 126.4, 124.9, 64.0, 52.3, 36.8;

MS El (*m*/*z*, relative Intensität) (M+ 231)

### Beispiel 6

### 2-[2-(9H-9-Carbazolyl)ethyl]-1,3,6,2-dioxazaborocan

Diese Verbindung wurde nach der allgemeinen Vorschrift A aus N-Vinylcarbazol (3,87 g, 20 mmol), das als Feststoff zugesetzt wurde, unter weiteren 8 h Rühren der Reaktionsmischung bei RT vor dem Quenchen mit Wasser hergestellt und unter Verwendung von MeOH für das Umkristallisieren in 67% Ausbeute (4,14 g, 13,43 mmol) in Form von farblosen Plättchen isoliert; Fp. 241-244°C (Zers.); IR (KBr) 3102 br, 1593, 1485, 1452, 1335, 1328, 1272, 1236, 1182, 1104, 1061 cm⁻¹; ¹H-NMR (200 MHz, DMSO-d₆) 8.11 (d, 2H, *J* = 7.7 Hz), 7.53 (d, 2H, *J* = 8.1 Hz), 7.42 (td, 2H, *J* = 6.7, 1.0 Hz), 7.14 (td, 2H, *J* = 7.7, 0.7 Hz), 7.00 (br. s, 1H), 4.32-4.19 (m, 2H), 3.85-3.60 (m, 4H), 3.20-3.00 (m, 2H), 2.90-2.70 (m, 2H), 0.85-0.70 (m, 2H); ¹³C-NMR (75.4 MHz, Methanol-d₄) 139.6, 125.3, 121.9, 120.2, 118.0, 109.1, 62.4, 50.7, 40.9;

MS El (*m*/*z*, relative Intensität) (M+ 308)

### Beispiel 7

### Allgemeine Vorschrift B:

### 4,4,5,5-Tetramethyl-2-[(E)-1-octenyl]-1,3,2-dioxaborolan

Eine Suspension von frisch hergestelltem Di-(1-isopropyl-3-methylbut-2-enyl)boran wurde langsam (∼20 min) mit Oct-1-in (2,95 mL, 20 mmol) versetzt, wobei die Reaktionstemperatur unter 5°C gehalten wurde. Die gebildete Mischung wurde 1 h bei 0°C gerührt, langsam mit H₂O (3 mL) gequencht (wobei etwas Gasentwicklung auftrat), 0,5 h bei RT gerührt und dann in einem Guss mit einer Lösung von Formaldehyd (1,50 ml, 20 mmol, 37 gew.-%ige Lösung in Wasser) versetzt (exotherme Reaktion, Kühlbad erforderlich). Die Reaktionsmischung wurde 1 h bei RT gerührt und dann mit Pinakol (2,60 g, 22 mmol) versetzt. Nach 24 h Rühren bei RT wurde die Mischung mit H₂O (40 mL) verdünnt und mit Heptan (40 mL) extrahiert, wonach das organische Extrakt mit H₂O (5 x 25 mL) gewaschen, getrocknet (Na₂SO₄) und im Vakuum eingeengt wurde. Der anfallende Rückstand wurde vorsichtig unter Vakuum destilliert (Kugelrohr), was 3,19 g des Produkts (13,39 mmol, 67% Ausbeute) in Form einer farblosen Flüssigkeit ergab, Kp. 70 - 80 °C (0,15 mmHg); IR (Film) 2928, 1639, 1363, 1319, 1146 cm⁻¹; ¹H-NMR (300 MHz, Aceton-d₆) 6.55 (dt, 1 H, *J* = 18.0, 6.6 Hz), 5.35 (dt, 1 H, *J* = 18.0, 1.5 Hz), 2.17-2.09 (m, 2H), 1.50-1.20 (m, 8H), 1.21 (s, 12H), 0.90-0.85 (m, 3H); ¹³C-NMR (75.4 MHz, Aceton-d₆) 155.0, 83.6, 36.5, 32.5, 29.7, 29.2, 25.2, 23.3, 14.4;

MS El (*m*/*z*, relative Intensität) (M+ 238)

### Beispiel 8

### 4,4,5,5-Tetramethyl-2-[(Z)-1-methyl-2-phenyl-1-ethenyl]-1,3,2-dioxaborolan (Hauptkomponente) und 4,4,5,5-Tetramethyl-2-[(Z)-1-phenyl-1-propenyl]-1,3,2-dioxaborolan (Nebenkomponente)

Diese Verbindungen wurden nach der allgemeinen Vorschrift B aus 1-Phenylprop-1-in (2,50 ml, 20 mmol) hergestellt und in 70 % Ausbeute (3,41 g, 13,97 mmol) in Form einer farblosen Flüssigkeit isoliert, bei der es sich laut ¹H-NMR um ein 83:17-Isomerengemisch handelte; Kp. 75-90°C (0,2 mmHg); ¹H-NMR (300 MHz, Aceton-d₆) 7.42-7.10 (komplex, 5H), 7.20 (br. s, 0.83H) und 6.70 (q, 0.17H, *J* = 7.2 Hz), 1.94 (d, 2.49H, *J* = 1.8 Hz) und 1.72 (d, 0.51 H, *J* = 7.2 Hz), 1.28 (s, 9.96H) und 1.23 (s, 2.04H); ¹³C-NMR (75.4 MHz, Aceton-d₆, Hauptkomponente(Nebenkomponente)) 143.1(143.1), 138.8(141.0), 130.2(130.0), 129.1(128.6), 128.2(126.7), 84.1(84.3), 25.3(25.2), 16.2(16.2).

### Beispiel 9

### 4,4,5,5-Tetramethyl-2-phenethyl-1,3,2-dioxaborolan

Diese Verbindung wurde nach der allgemeinen Vorschrift B aus Styrol (2,29 ml, 20 mmol) unter weiteren 2 h Rühren der Reaktionsmischung bei RT hergestellt und in 71 % Ausbeute (3,28 g, 14,13 mmol) in Form einer farblosen Flüssigkeit isoliert, Kp. 70-80 °C (0,1 mmHg); IR (Film) 2979, 1372, 1322, 1145 cm⁻¹; ¹H-NMR (300 MHz, Aceton-d₆) 7.27-7.15 (m, 4H), 7.15-7.09 (m, 1H), 2.68 (t, 2H, *J* = 8.0 Hz), 1.18 (s, 12H), 1.03 (t, 2H, *J* = 8.0 Hz); ¹³C-NMR (75.4 MHz, Aceton-d₆) 145.4, 129.0, 128.8, 126.3, 83.7, 30.8, 25.2;

MS El (*m*/*z*, relative Intensität) (M+ 232)

### Beispiel 10

### 2-(3,3-Diethoxypropyl)-4,4,5,5-tetramethyl-1,3,2-dioxaborolan

Diese Verbindung wurde nach der allgemeinen Vorschrift B aus Acroleindiethylacetal (3,05 ml, 20 mmol) unter weiteren 2 h Rühren der Reaktionsmischung bei RT hergestellt und in 63 % Ausbeute (3,26 g, 12,63 mmol) in Form einer farblosen Flüssigkeit isoliert; Kp. 65-80°C (0,25 mmHg); IR (Film) 2977, 2932, 2880, 1371, 1325, 1147, 1127, 1061 cm⁻¹; ¹H-NMR (200 MHz, Aceton-d₆) 4.39 (t, 1 H, *J* = 5.7 Hz), 3.65-3.35 (m, 4H), 1.65-1.55 (m, 2H), 1.20 (s, 12H), 1.12 (t, 6H, *J* = 7.0 Hz), 0.74 (t, 2H, *J* = 8.0 Hz); ¹³C-NMR (125.8 MHz, Aceton-d₆) 104.8, 83.5, 61.4, 28.8, 25.1, 15.7;

MS El (*m*/*z*, relative Intensität) (M+ 258)

### Beispiel 11

### 4-[2-(4,4,5,5-Tetramethyl-1,3,2-dioxaborolan-2-yl)ethyl]-1,3-dioxolan-2-on

Diese Verbindung wurde nach der allgemeinen Vorschrift B aus 4-Vinyl-1,3-dioxolan-2-on (1,92 ml, 20 mmol) unter weiteren 2 h Rühren der Reaktionsmischung bei RT hergestellt und unter Verwendung von EtOAc (80 mL) im Extraktionsschritt in 77 % Ausbeute (3,72 g, 15,37 mmol) in Form eines farblosen Öls isoliert; Kp. 105-120°C (0,25 mmHg); IR (Film) 2980, 2933, 1805, 1381, 1328, 1166, 1145, 1066 cm⁻¹; ¹H-NMR (300 MHz, Aceton-d₆) 4.81-4.71 (m, 1H), 4.59 (td, 1H, *J* = 8.1, 0.6 Hz), 4.15 (dd, 1H, *J* = 8.1, 6.9), 1.86-1.76 (m, 2H), 1.22 (s, 12H), 0.85-0.76 (m, 2H); ¹³C-NMR (75.4 MHz, Aceton-d₆) 155.7, 84.0, 79.1, 69.9, 28.9, 25.23, 25.16;

MS El (*m*/*z*, relative Intensität) (M+ 242)

### Beispiel 12

### Allgemeine Vorschrift C:

### trans-4,5-Dimethyl-2-[(E)-2-phenyl-1-ethenyl]-4,5-di[(E)-1,1,4-trimethyl-2-pentenyl]-1,3,2-dioxaborolan

Eine Suspension von frisch hergestelltem Di-(1-isopropyl-3-methylbut-2-enyl)boran wurde langsam (~20 min) mit Phenylacetylen (2,20 mL, 20 mmol) versetzt, wobei die Reaktionstemperatur unter 5°C gehalten wurde. Die gebildete Mischung wurde 1 h bei 0°C gerührt und dann in einem Guss mit 2,3-Butandion (1,93 mL, 22 mmol) versetzt (exotherme Reaktion, Kühlbad erforderlich). Nach 12 h Rühren bei RT wurde die Reaktionsmischung im Vakuum eingeengt, mit H₂O (40 mL) verdünnt und mit Heptan (40 mL) extrahiert. Das organische Extrakt wurde mit H₂O (3 x 20 mL) gewaschen, getrocknet (Na₂SO₄) und eingeengt, wonach der anfallende Rückstand im Vakuum destilliert wurde (Kugelrohr), was 6,06 g (14,34 mmol, 72% Ausbeute) des Produkts in Form eines farblosen zähflüssigen Öls ergab; Kp. 140-155 °C (0,1 mmHg); IR (Film) 2960, 1626, 1578, 1451, 1388, 1352, 1326, 1209, 1082 cm⁻¹; ¹H-NMR (200 MHz, Aceton-d₆) 7.63-7.58 (m, 2H), 7.45 (d, 1H, *J* = 18.4 Hz), 7.46-7.35 (m, 3H), 6.27 (d, 1H, *J* = 18.4 Hz), 5.71 (dd, 2H, *J* = 15.8, 1.1 Hz), 5.35 (dd, 2H, *J* = 15.8, 6.8 Hz), 2.30-2.15 (m, 2H), 1.53 (s, 6H), 1.12 (s, 6H), 1.11 (s, 6H), 0.94 (d, 6H, *J* = 6.7 Hz), 0.93 (d, 6H, *J* = 6.7 Hz); ¹³C-NMR (75.4 MHz, Aceton-d₆) 150.4, 138.6, 135.8, 134.8, 129.9, 129.6, 128.0, 92.9, 46.6, 32.4, 26.2, 26.1, 22.95, 22.88, 19.4;

MS El (*m*/*z*, relative Intensität) (M+ 422)

### Beispiel 13

### trans-2-[(E)-2-(1,1,1-Trimethylsilyl)-1-ethenyl]-4,5-dimethyl-4,5-di[(E)-1,1,4-trimethyl-2-pentenyl]-1,3,2-dioxaborolan

Diese Verbindung wurde nach der allgemeinen Vorschrift C aus Trimethylsilylacetylen (2,83 mL, 20 mmol) hergestellt und in 59% Ausbeute (4,91 g, 11,73 mmol) in Form eines farblosen zähflüssigen Öls isoliert, Kp. 120-130 °C (0,3 mmHg); IR (Film) 2958, 1596, 1465, 1330, 1279, 1248, 1083 cm⁻¹; ¹H-NMR (300 MHz, Aceton-d₆) 7.15 (d, 1H, *J* = 21.9 Hz), 6.31 (d, 1H, *J* = 21.9 Hz), 5.66 (dd, 2H, *J* = 15.9, 1.2 Hz), 5.33 (dd, 2H, *J* = 15.9, 6.6 Hz), 2.30-2.15 (m, 2H), 1.49 (s, 6H), 1.08 (s, 12H), 0.94 (d, 6H, *J* = 6.9 Hz), 0.93 (d, 6H, *J* = 6.9 Hz), 0.10 (s, 9H); ¹³C-NMR (75.4 MHz, Aceton-d₆) 157.9, 135.7, 134.8, 93.0, 46.5, 32.3, 26.1, 22.90, 22.86, 19.3, -1.6;

MS El (*m*/*z*, relative Intensität) (M+ 418)

### Beispiel 14

### trans-2-(2-Isobutoxyethyl)-4,5-dimethyl-4,5-di[(E)-1,1,4-trimethyl-2-pentenyl]-1,3,2-dioxaborolan

Diese Verbindung wurde nach der allgemeinen Vorschrift C aus Isobutylvinylether (2,61 mL, 20 mmol) unter weiteren 2 h Rühren der Reaktionsmischung bei RT vor der 2,3-Butandion-Zugabe hergestellt und in 73% Ausbeute (6,11 g, 14,53 mmol) in Form eines farblosen zähflüssigen Öls isoliert; Kp. 120-130 °C (0,2 mmHg); IR (Film) 2958, 2870, 1466, 1382, 1322, 1107, 1082 cm⁻¹; ¹H-NMR (200 MHz, Aceton-d₆) 5.68 (dd, 2H, *J* = 15.8, 1.1 Hz), 5.33 (dd, 2H, *J* = 15.8, 6.8 Hz), 3.56 (t, 2H, *J* = 7.5 Hz), 3.15 (dd, 2H, *J* = 6.6, 1.5 Hz), 2.35-2.15 (m, 2H), 1.90-1.75 (m, 1 H), 1.46 (s, 6H), 1.19 (t, 2H, *J* = 7.5 Hz), 1.08 (s, 6H), 1.07 (s, 6H), 0.96 (d, 12H, *J* = 6.7 Hz), 0.87 (d, 6H, *J* = 6.6 Hz); ¹³C-NMR (125.8 MHz, Aceton-d₆) 135.3, 134.0, 92.2, 77.6, 67.7, 45.9, 31.8, 28.8, 25.6, 25.5, 22.4, 19.34, 19.32, 18.8;

MS El (*m*/*z*, relative Intensität) (M+ 420)

### Beispiel 15

### (E)-2-(6,6-Dimethyl-bicydo[3.1.1]hept-2-ylmethyl)-4,5-dimethyl-4,5-bis(1,1,4-trimethyl-pent-2-enyl)-[1,3,2]dioxaborolan

Diese Verbindung wurde nach der allgemeinen Vorschrift C aus (1*S*)-(-)-β-Pinen (3,15 mL, 20 mmol) unter 1 h Weiterrühren der Reaktionsmischung bei RT vor der 2,3-Butandion-Zugabe hergestellt und in 72% Ausbeute (6,56g, 14,37 mmol) in Form eines farblosen zähflüssigen Öls isoliert; Kp. 135-150 °C (0,25 mmHg); IR (Film) 2957, 2904, 2868, 1466, 1374, 1315, 1083 cm⁻¹; ¹H-NMR (300 MHz, Aceton-d₆) 5.68 (dt, 2H, *J* = 15.9, 1.2 Hz), 5.33 (ddd, 2H, *J* = 15.9, 6.6, 1.5 Hz), 2.40-2.07 (m, 6H), 2.03-1.80 (m, 4H), 1.60-1.45 (m, 1H), 1.45 (s, 6H), 1.92 (s, 3H), 1.08 (s, 15H), 1.05-1.00 (m, 1H), 0.96 (d, 12H, *J* = 6.6 Hz), 0.94-0.85 (m, 1H); ¹³C-NMR (75.4 MHz, Aceton-d₆) 135.90, 135.87, 134.4, 92.5, 49.5, 49.4, 46.4, 46.3, 42.2, 39.5, 38.0, 34.61, 34.58, 32.39, 32.35, 28.8, 27.46, 27.43, 26.44, 26.38, 26.1, 26.0, 25.8, 23.8, 22.94, 22.93, 19.51, 19.50;

MS El (*m*/*z*, relative Intensität) (M+ 456)

## Patentansprüche

1. Verfahren zur Herstellung von Bisallylboranen der Formel (**I**) durch Umsetzung eines Dienes mit Natriumborhydrid in Gegenwart eines Oxidationsmittels 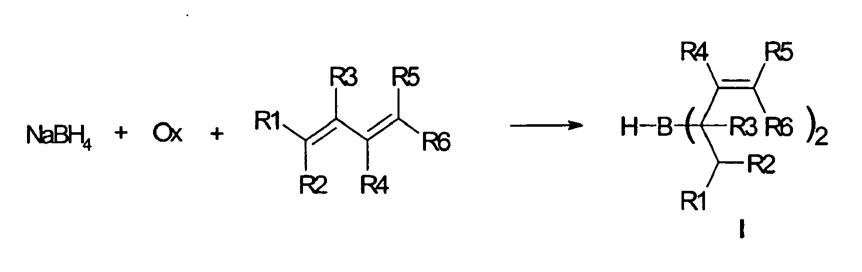 in einem inerten Lösungsmittel, wobei das in situ erzeugte Boran mit dem Dien selektiv zum Bis(allyl)boran der Formel (**I**) reagiert und die Substituenten R¹ bis R⁶ folgende Bedeutung haben:
R¹-R⁶ bedeuten H, Aryl oder substituiertes oder unsubstituiertes C₁-C₄-Alkyl oder zwei Reste R können zu einem cyclischen System geschlossen sein.

2. Verfahren nach Anspruch 1, **dadurch gekennzeichnet, dass** als Dien 2,5-Dimethylhexa-2,4-dien (R¹, R², R⁵, R⁶ = Methyl, R³, R⁴ = H) eingesetzt wird.

3. Verfahren nach Anspruch 1 und/oder 2, **dadurch gekennzeichnet, dass** als Oxidationsmittel Alkylhalogenide oder Dialkylsulfate verwendet werden.

4. Verfahren nach mindestens einem der vorhergehenden Ansprüche, **dadurch gekennzeichnet, dass** als Oxidationsmittel Dimethyl- oder Diethylsulfat oder Benzylbromid oder lodethan verwendet werden.

5. Verfahren nach mindestens einem der vorhergehenden Ansprüche, **dadurch gekennzeichnet, dass** als inertes Lösungsmittel Ether oder (C₁- C₁₀)-Kohlenwasserstoffe oder deren Gemische verwendet werden.

6. Verfahren nach mindestens einem der vorhergehenden Ansprüche, **dadurch gekennzeichnet, dass** als inertes Lösungsmittel Diglyme verwendet wird.

7. Verfahren nach mindestens einem der vorhergehenden Ansprüche, **dadurch gekennzeichnet, dass** das Dien in 1 bis 10 Moläquivalenten bezogen auf das Natriumborhydrid eingesetzt wird.

8. Di-(1-1-isopropyl-3-methylbut-2-enyl)boran.

9. Bis(allyl)borane der Formel (I) erhältlich gemäß einem Verfahren nach mindestens einem der Ansprüche 1 bis 7.

10. Verwendung eines Bis(allyl)borans der Formel (III) oder (V) in C-C-Knüpfungsreaktionen, insbesondere in Suzuki-Kupplungsreaktionen 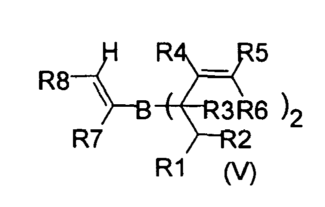 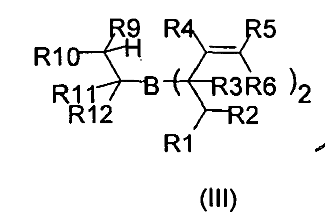 Die Reste R¹-R⁶ bedeuten H, Aryl oder C₁-C₄-Alkyl, substituiert oder unsubstituiert, und können zu einem cyclischen System geschlossen sein, und die Reste R⁷ bis R¹² stehen dabei für Aryl, gegebenenfalls substituiert, Alkyl-(C₁-C₈), gegebenenfalls verzweigt und oder substituiert, Alkoxy-(C₁-C₈), Acyloxy-(C₁-C₈), OPhenyl, Fluor, Chlor, NO₂, NH₂, NHAlkyl-(C₁-C₈), NAlkyl₂-(C₁-C₈), CN, CHO, SO₃H, SO₃R, SO₂NH₂, SO₂N(Alkyl-(C₁-C₈))₂, SO₂-Alkyl-(C₁-C₈), COO-Alkyl-(C₁-C₈), CONH₂, CO-Alkyl-(C₁-C₈), NHCHO, CF₃, 5-Ring-heteroaryl und 6-Ring-heteroaryl. Zwei Reste können auch ein cyclisches System bilden, das Heteroatome enthalten kann.

11. Verfahren zur Herstellung von Boronsäuren, durch Umsetzung eines Dienes mit Natriumborhydrid in Gegenwart eines Oxidationsmittels zu dem entsprechenden Bis(allyl)boran der Formel (I) gemäß Anspruch 1 und weiterer Reaktion des Borans (I) mit einem entsprechenden Alken (II) oder Alkin (IV) zu den Alkyl- (III) und Alkenylbis(ally)boranen (V), welche in Gegenwart eines Oxidationsmittels direkt zu den entsprechenden Alkyl- bzw. Alkenyl-boronsäurebisallyestern oxidiert werden und gegebenenfalls anschließend derivatisiert werden 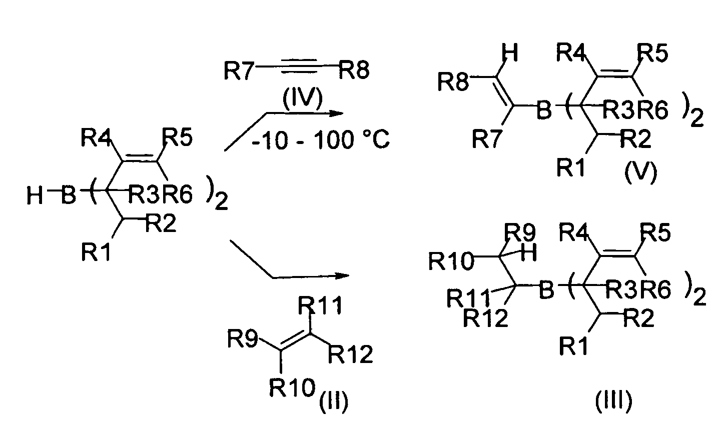 worin die Reste R¹ - R¹² die in Anspruch 10 gegebene Bedeutung haben.

12. Verfahren nach Anspruch 11 und 12, **dadurch gekennzeichnet, dass** als Oxidationsmittel Formaldehyd, Aceton, Glyoxal und Diacetyl verwendet werden.

13. Verwendung eines gemäß Anspruch 11 erzeugten Alkyl- bzw. Alkenylboronsäurebis(allyl)esters in C-C-Knüpfungsreaktionen, insbesondere in Suzuki-Kupplungsreaktionen.

## Claims

1. A process for preparing bisallylboranes of the formula (I) by reacting a diene with sodium borohydride in the presence of an oxidant 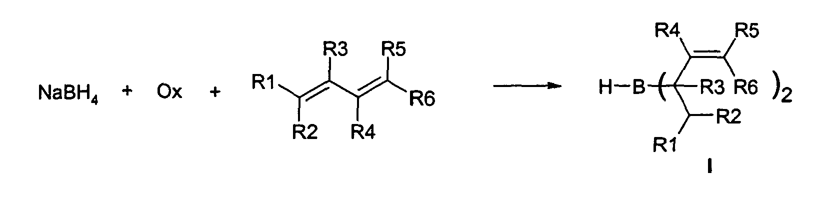 in an inert solvent, with the borane generated in situ reacting selectively with the diene to form the bis(allyl)borane of the formula (I) and the substituents R¹ to R⁶ having the following meanings:
R¹-R⁶ are H, aryl or substituted or unsubstituted C₁-C₄₋alkyl or two radicals R may be closed to form a cyclic system.

2. The process as claimed in claim 1, wherein the diene used is 2,5-dimethylhexa-2,4-diene (R¹, R², R⁵, R⁶ = methyl, R³, R⁴ = H).

3. The process as claimed in claim 1 and/or 2, wherein the oxidant used is an alkyl halide or dialkyl sulfate.

4. The process as claimed in at least one of the preceding claims, wherein the oxidant used is dimethyl sulfate or diethyl sulfate or benzyl bromide or iodoethane.

5. The process as claimed in at least one of the preceding claims, wherein the inert solvent used is an ether or a (C₁-C₁₀)-hydrocarbon or a mixture thereof.

6. The process as claimed in at least one of the preceding claims, wherein the inert solvent used is diglyme.

7. The process as claimed in at least one of the preceding claims, wherein the diene is used in an amount of from 1 to 10 molar equivalents based on the sodium borohydride.

8. Di(1-1-isopropyl-3-methylbut-2-enyl)borane.

9. A bis(allyl)borane of the formula (I) obtainable by a process as claimed in at least one of claims 1 to 7.

10. The use of a bis(allyl)borane of the formula (III) or (V) in C-C coupling reactions, in particular in Suzuki coupling reactions 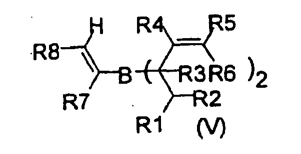 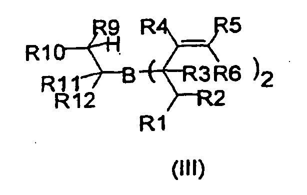 The radicals R¹-R⁶ are H, aryl or C₁-C₄-alkyl, substituted or unsubstituted, and may be closed to form a cyclic system, and the radicals R⁷ to R¹² are, in particular, aryl, substituted or unsubstituted, alkyl-(C₁-C₈), which may be branched and/or substituted, alkoxy-(C₁-C₈), acyloxy-(C₁-C₈), Ophenyl, fluorine, chlorine, NO₂, NH₂, NHalkyl-(C₁-C₈), Nalkyl₂-(C₁-C₈), CN, CHO, SO₃H, SO₃R, SO₂NH₂, SO₂N(alkyl-(C₁-C₈))₂, SO₂-alkyl-(C₁-C₈), COO-alkyl-(C₁-C₈), CONH₂, CO-alkyl-(C₁-C₈), NHCHO, CF₃, 5-membered heteroaryl or 6-membered heteroaryl. Two radicals can also form a cyclic system which may contain heteroatoms.

11. A process for preparing boronic acids by reaction of a diene with sodium borohydride in the presence of an oxidant to form the corresponding bis(allyl)borane of the formula (I) as described in claim 1 and further reaction of the borane (I) with an appropriate alkene (II) or alkyne (IV) to give the alkylbis(allyl)borane (III) or alkenylbis(allyl)borane (V) which is oxidized directly in the presence of an oxidant to form the corresponding bisallyl alkylboronate or alkenylboronate and, if desired, subsequent conversion into a derivative 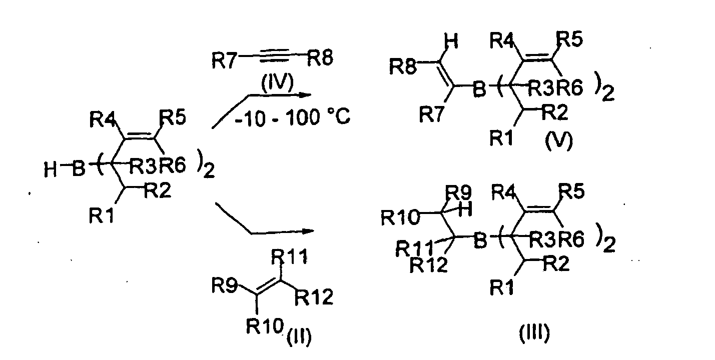 in which the radicals R₁-R₁₂ have the meaning given in claim 10.

12. The process as claimed in claim 11 or 12, wherein the oxidant used is formaldehyde, acetone, glyoxal or diacetyl.

13. The use of a bis(allyl) alkylboronate or alkenylboronate produced as claimed in claim 11 in C-C coupling reactions, in particular in Suzuki coupling reactions.

## Revendications

1. Procédé de préparation de bisallylboranes de formule (I) par réaction d'un diène avec du borohydrure de sodium en présence d'un agent oxydant 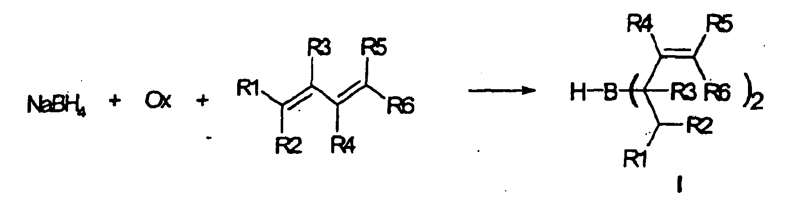 dans un solvant inerte, dans lequel le borane produit in situ réagit sélectivement avec le diène pour donner le bis(allyl)borane de formule (I) et les substituants R¹ à R⁶ ont la signification suivante :
R¹ à R⁶ représentent H, un aryle ou alkyle en C₁ à C₄ substitué ou non substitué ou deux radicaux R pouvant être fermés en un système cyclique.

2. Procédé selon la revendication 1, **caractérisé en ce qu'**on utilise comme diène le 2,5-diméthylhexa-2,4-diène (R¹, R², R⁵, R⁶ = méthyle, R³, R⁴ =H).

3. Procédé selon la revendication 1 et/ou 2,
**caractérisé en ce qu'**on utilise comme agent d'oxydation des halogénures d'alkyle ou des sulfates de dialkyle.

4. Procédé selon au moins l'une des revendications précédentes, **caractérisé en ce qu'**on utilise comme agent d'oxydation le sulfate de diméthyle ou de diéthyle ou le bromure de benzyle ou l'iodoéthane.

5. Procédé selon au moins l'une des revendications précédentes, **caractérisé en ce qu'**on utilise comme solvant inerte des éthers ou des hydrocarbures en C₁ à C₁₀ ou leurs mélanges.

6. Procédé selon au moins l'une des revendications précédentes, **caractérisé en ce qu'**on utilise comme solvant inerte le diglyme.

7. Procédé selon au moins l'une des revendications précédentes, **caractérisé en ce qu'**on utilise le diène en 1 à 10 équivalents molaires par rapport au borohydrure de sodium.

8. Di-(1-isopropyl-3-méthylbut-2-ényl)borane.

9. Bis(allyl)boranes de formule (I) pouvant être obtenus selon un procédé conforme à au moins l'une des revendications 1 à 7.

10. Utilisation d'un bis(allyl)borane de formule (III) ou (V) dans des réactions de couplage C-C, en particulier dans des réactions de couplage de Suzuki 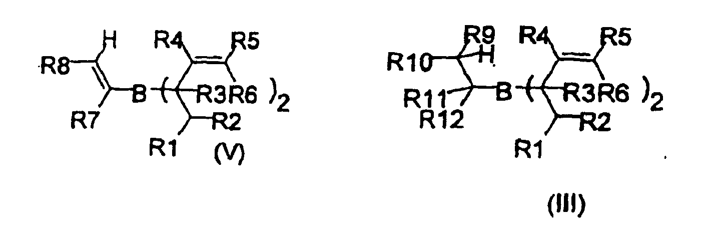 formules dans lesquelles les radicaux R¹ à R⁶ représentent H, un aryle ou alkyle en C₁ à C₄, substitué ou non substitué et peuvent être fermés en un système cyclique, et
les radicaux R⁷ à R¹² représentent un aryle, éventuellement substitué, alkyle en C₁ à C₈, éventuellement ramifié et/ou substitué, alcoxy en C₁ à C₈, acyloxy en C₁ à C₈, O-phényle, fluor, chlore, NO₂, NH₂, NH-alkyle en C₁ à C₈, N-(alkyle en C₁ à C₈)₂, CN, CHO, SO₃H, SO₃R, SO₂NH₂, SO₂N(alkyle en C₁ à C₈)₂, SO₂₋alkyle en C₁ à C₈, COO-alkyle en C₁ à C₈, CONH₂, CO-alkyle en C₁ à C₈, NHCHO, CF₃, hétéroaryle à 5 chaînons et hétéroaryle à 6 chaînons ; deux radicaux peuvent aussi former un système cyclique qui peut contenir des hétéroatomes.

11. Procédé de préparation d'acides boroniques, par réaction d'un diène avec du borohydrure de sodium en présence d'un oxydant pour donner le bis(allyl)borane correspondant de formule (I) selon la revendication 1 et ensuite réaction du borane (I) avec un alcène(II) ou alcyne(IV) correspondant pour donner les alkyl-(III) et alcénylbis(allyl)boranes(V), qui sont oxydés directement en présence d'un oxydant en esters bisallyliques d'acide alkyl- ou alcényl-boronique et sont éventuellement ensuite dérivés 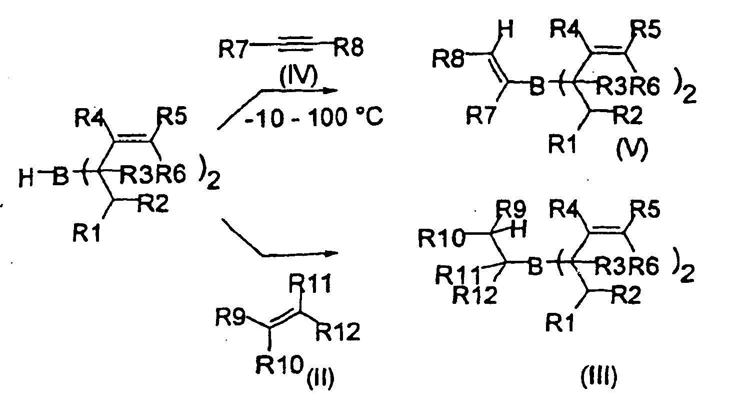 formules dans lesquelles les radicaux R¹ à R¹² ont la signification donnée à la revendication 10.

12. Procédé selon la revendication 11 et 12, **caractérisé en ce qu'**on utilise comme agent d'oxydation le formaldéhyde, l'acétone, le glyoxal et le diacétyle.

13. Utilisation d'un ester bis(allylique) d'acide alcénylboronique selon la revendication 11 dans des réactions de couplage C-C, en particulier dans des réactions de couplage de Suzuki.
